Europäisches Patentamt

(19) European Patent Office

Office européen des brevets

(11) Publication number : **0 508 603 A2**

## (12) EUROPEAN PATENT APPLICATION

(21) Application number : **92302088.7**

(22) Date of filing : **11.03.92**

(51) Int. Cl.⁵ : **G06F 12/02**

(30) Priority : **13.03.91 US 668570**

(43) Date of publication of application :
**14.10.92 Bulletin 92/42**

(84) Designated Contracting States :
**DE FR GB**

(71) Applicant : **NCR INTERNATIONAL INC.**
**1700 South Patterson Boulevard**
**Dayton, Ohio 45479 (US)**

(72) Inventor : **Lall, Thomas Beherumal**
**906 Avon Drive**
**Cambridge, Ohio 43725 (US)**

(74) Representative : **Robinson, Robert George**
**International Patent Department NCR Limited**
**915 High Road North Finchley**
**London N12 8QJ (GB)**

(54) **A method of operating a terminal device having first and second display means.**

(57) The invention provides for a method of increasing the memory available for application programs in a terminal device, for example point of sale device, and includes the steps of detecting unoccupied memory regions (38-46,56,60) above a threshold, for example 640K bytes, mapping the detected unoccupied memory regions (38-46,56,60), storing in a memory control block (62) associated with a mapped memory region pointers locating the detected newly mapped memory regions so as to expand the memory space available for application programs, and notifying the terminal apparatus memory management of the newly available mapped and detected memory regions.

**FIG. 8**

EP 0 508 603 A2

The present invention relates to a method of operating a terminal device having first and second display means.

In recent years, the use of personal computers as Point of Sales (POS) terminal systems has increased. The most popular operating system used in personal computers is the DOS developed by Microsoft Corporation. The conventional memory under DOS is one megabyte with 640K bytes available for storing DOS and other application programs while the remaining memory has been reserved for systems such as video displays and BIOS. Where the terminal systems require a larger memory, costly hardware and software implementations are required to increase the memory capacity of the terminal systems. Extended Memory programs have been developed which address memories above the one megabyte limit, but which are required to operate in a "protected mode". Since DOS runs all processors in a "real mode", for software compatibility reasons, the processors cannot gain access to the extended memory until they are switched to the protected mode. Where the system interrupts require a time period for their execution which is equal to the time period required to switch the processor between the real and protected mode, such memory management programs are not feasible.

The invention therefore seeks to provide for a method of operating a terminal device which increases the memory capability for application programs while not exhibiting the above disadvantages.

According to the present invention, there is provided a method of operating a terminal device operatively connectable to either a first or a second display means having different memory requirements, the device having processor means including first and second memory spaces, said second memory space serving to store application programs, and said first memory space comprising a plurality of memory regions characterized by providing each of said memory regions with a memory control block, identifying the memory requirement of the display means connected to the terminal device, identifying pages of unmapped memory regions in said first memory space, mapping said identified pages so as to map the unmapped memory regions, and storing data representing said mapped identified pages in the memory control block of the last memory region thereby mapped so as to indicate the presence of said mapped identified pages in said first memory space, whereby said mapped identified pages may be associated with said second (55) memory space to expand the size of said second (55) memory space.

The invention is described further hereinafter, by way of example only, with reference to the accompanying drawings in which:-

Fig. 1 is a perspective view of a terminal device showing the location of CRT display means together with operator display means

Fig. 2 is a block diagram illustrating the memory map of the memory in a retail terminal device which includes CRT display means;

Fig. 3 is a block diagram similar to Fig. 2 showing the memory map of the memory in a retail terminal device which includes operator display means;

Fig. 4 is a block diagram similar to Fig. 2 illustrating the memory map of the memory that is available for DOS operations as a result of expanding the memory in a retail device including CRT display means;

Fig. 5 is a block diagram similar to Fig. 3 illustrating the memory map of the memory that is available for DOS operations as a result of expanding the memory in a retail device including an operator's display means;

Fig. 6 is a block diagram of the memory associated with a retail terminal device showing the location of the Memory Control Block (MCB) and the pointers (PSP) for each memory region in the memory;

Fig. 7 is a block diagram of a memory control block;

Fig. 8 is a schematic flow diagram illustrating a method for expanding contiguous memory embodying the present invention;

Fig. 9 is a schematic flow diagram illustrating the steps taken to terminate the memory expansion sequence;

Fig. 10 is a block diagram of a terminal device associated with an embodiment of the present invention; and

Fig. 11 is a table in order the sequence of the utility programs employed by DOS to expand the contiguous memory according to a method embodying the present invention.

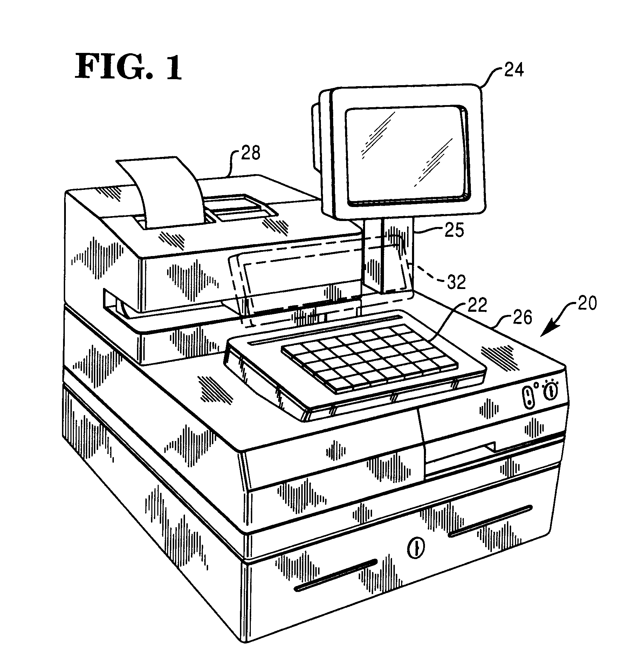

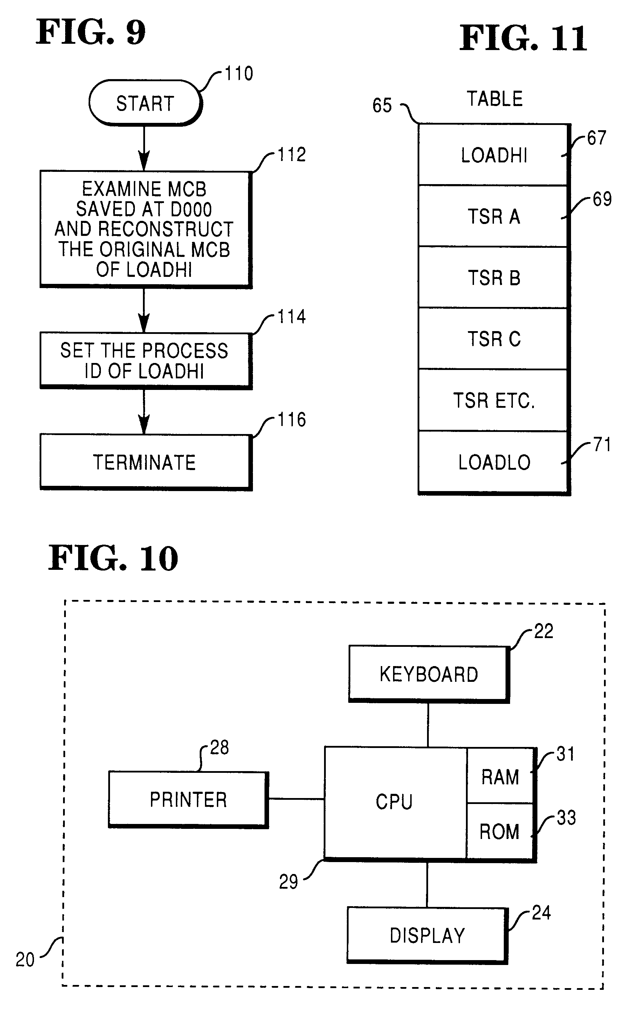

Referring now to Fig. 1, there is shown a perspective view of a point-of-sale terminal device 20 in which the present invention resides. The terminal device 20 includes a keyboard member 22 and a Cathode Ray Tube (CRT) display unit 24 mounted on a post member 25 secured to the housing structure 26 of the terminal device 20. Further included in the terminal device 20 is a printer member 28. As an alternate arrangement to the CRT display unit 24, a elongate operator display unit 32 may be mounted on the housing member 26 in any conventional manner adjacent the rear edge of the keyboard member 22. A memory expansion program of the present invention detects which of the CRT display unit 24 or the operator display unit 32 is connected for operation with the terminal device 20 when it operates to expand the memory associated with a Central Processing Unit (CPU) 29 (Fig. 10) associated with the terminal device. As shown in Fig. 10, the terminal device 20 includes a RAM memory unit 31 and a ROM memory unit 33.

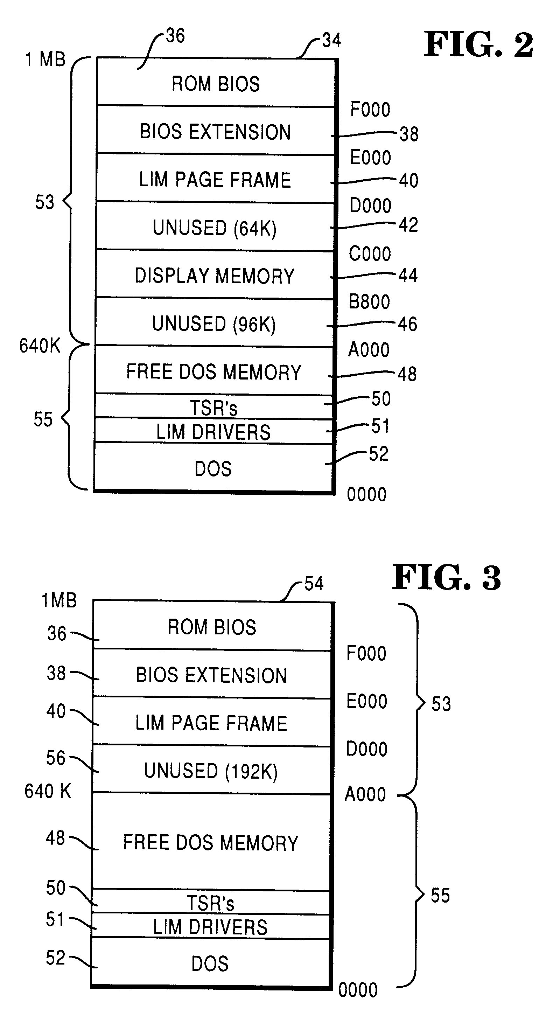

Referring now to Figs. 2 and 3, there is disclosed a schematic representation of a memory map of the memory of the computer associated with the terminal device 20 and which is selectively operable with either a CRT display unit 24 or the operator display unit 32. Fig. 2 represents a memory map of the memory when a CRT display unit 24 is present. Included in the memory 34 which comprises the RAM memory unit 31 and the ROM memory unit 33 (Fig. 10), is a memory region 36 for the ROM BIOS programs which extends from address F000 to the one megabyte ceiling, memory region 38 in which is located the BIOS extension programs extending from address E000 to F000, memory region 40 in which is stored the LIM page frame extending from address D000 to E000, memory region 42 comprising 64K bytes of unused memory space and extending from address C000 to D000, memory region 44 assigned to the CRT display memory unit 24 extending from address B800 to C000 and memory region 46 comprising 96K bytes of unused memory space, extends from address A000 to B800. The memory space between address A000 and the one megabyte ceiling is designated as high memory 53. The remaining area space of the memory 34 which is designated as low memory 55 and includes free DOS memory region 48, memory region 50, in which is stored Terminate-Stay-Resident (TSR) programs, memory region 51 in which is stored the LIM drivers and memory region 52 in which is stored the DOS operating programs. The conventional DOS or low memory space 55 which extends between addresses 0000 and A000 comprises 640K bytes of contiguous memory space.

In a similar manner, Fig. 3 shows a memory map of the memory 54 associated with the terminal device 20 (Fig. 1) when the operator display unit 32 is used. The only difference between the memory 54 and the memory 34 is the memory region 56 (Fig. 3) comprising 192K bytes of unused memory space which does not require any memory space dedicated to the operator display unit 32.

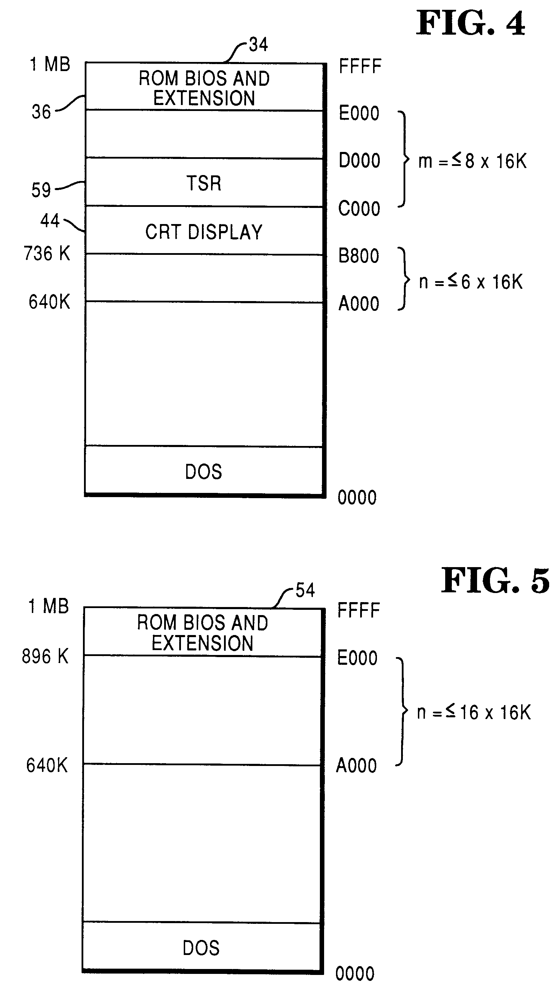

Referring now to Figs. 4 and 5, there is shown a schematic representation of the memory map of the memories 34 and 54 after the present invention has extended the contiguous memory space which is available to DOS and other application programs. As shown in Fig. 4, the memory region 50 (Figs. 2 and 3), in which is located the terminate-stay-resident (TSR) programs has been relocated to the memory region 59 adjacent the CRT DISPLAY memory region 44 while in Fig. 5, memory region 50 has been eliminated. In the case of the memory 34, there is now available 736K bytes of contiguous memory while in memory 54, there is now available 896K bytes of contiguous memory. The LIM drivers stored in regions 51 (Figs. 2 and 3) are associated with the LIM EMS 4.0 application program. As is well known, the LIM page frame memory region 40 occupies 64K bytes of memory space in which is stored pages of memory mapped in from expanded memory. The LIM drivers allow the DOS applications to have access to this space.

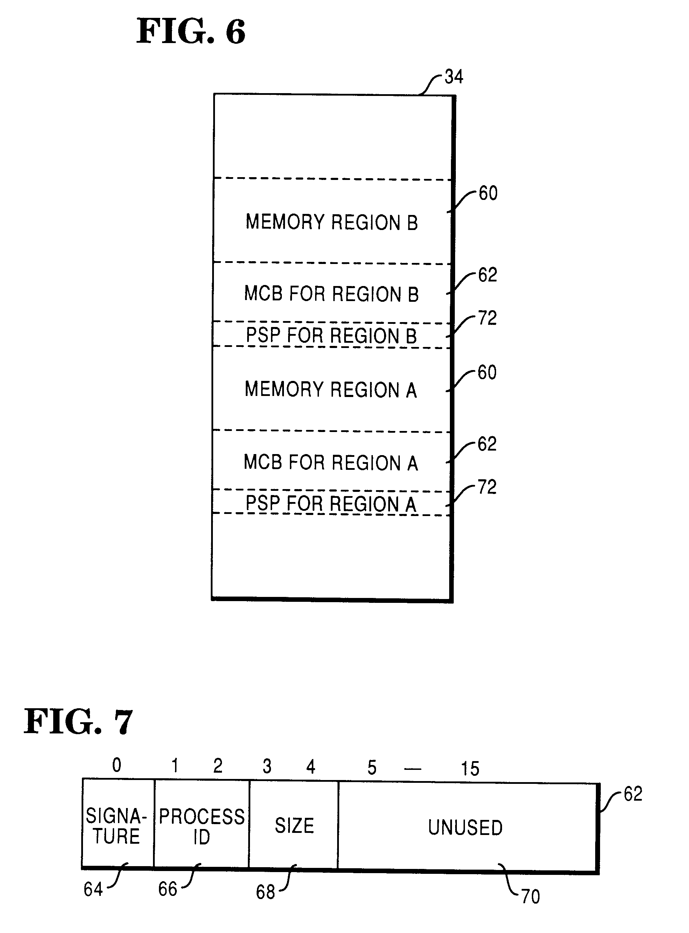

Referring now to Fig. 6, there is shown a diagrammatic representation of a portion of the memory 34 showing the location of the memory control blocks (MCB) which are associated with each of the memory regions in the memories 34 and 54 (Figs. 2 and 3). Associated with each of the memory regions 60 is a memory control block (MCB) 62 located one paragraph before its associated memory region for controlling access to its respective memory region. Each memory control block 62 is 16 bytes long (Fig. 7) including a signature field 64 containing one byte of data identifying the last MCB in the memory and 2 bytes stored in a field 66 representing a process ID identifying the program which owns the MCB and its associated memory. A value of zero indicates that the associated memory region is free for use.

The memory control block 62 further includes 2 bytes stored in the field 68 representing the size of its associated memory region. The MCBs in each of the memories 34 and 54 form a chain. Given the location of an MCB, the next MCB can be located by adding the size field to the MCB segment address and incrementing this value by one. This gives the segment address or starting address of the next higher MCB. The remaining bytes in field 70 of the MCB are unused. As shown in Fig. 6, located adjacent the memory region 62 is the memory region 72 in which are stored the Program Segment Prefix pointers (PSP) which locate the available free memory space in its associated memory region enabling the DOS programs to locate and access the specific memory region associated with the designated MCB.

Referring to Fig. 11, there is shown a Table 65 which lists in sequence the programs applied by DOS in expanding the contiguous memory. Included in the table is the program LOADHI which will map the expanded memory in a manner that will be described more fully hereinafter and then load the TSR programs 69 into the memory region 59 (Fig. 4). DOS will then apply the program LOADLO which terminates the program LOADHI as will be described hereinafter. Both of the programs LOADHI and LOADLO are stored in the DOS memory region 52 (Figs. 2 and 3).

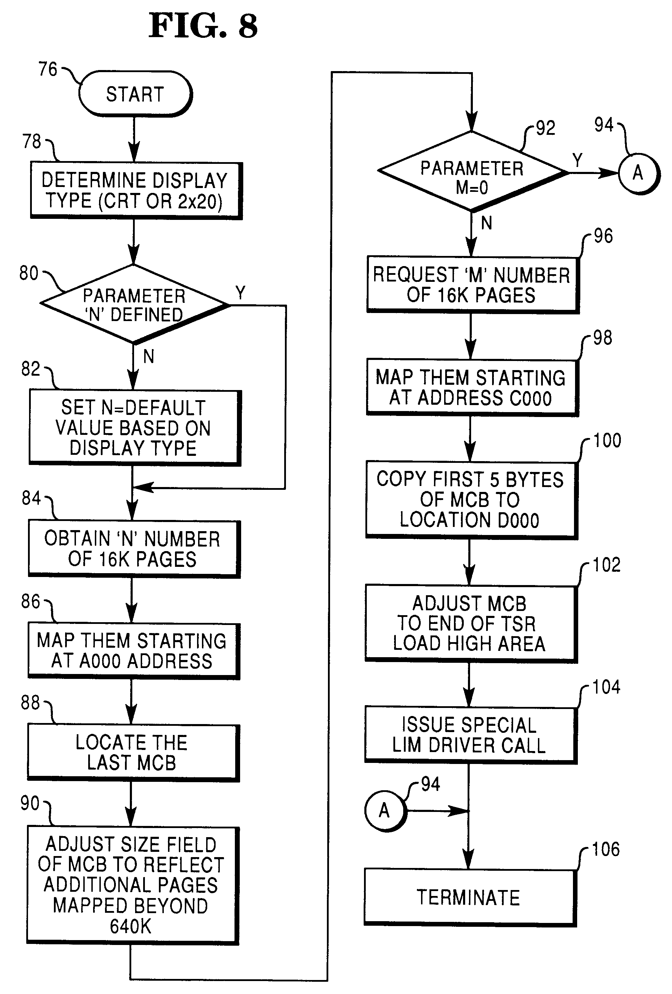

Referring now to Fig. 8 there is shown a schematic flow diagram of the program LOADHI for expanding the contiguous memory available for use by the DOS programs. The program which is stored in the memory region 50 (Figs. 2 and 3) determines the type of the display in the terminal device and then locates the address of the free memory regions or holes located in the high memory 53 (Figs. 2 and 3) above the 640K bytes boundary. The program will then store the TSR programs 69 (Fig. 11) in the memory region 59 (Fig. 4) and adjust the last memory control block to identify the location of the additional contiguous memory when accessed by DOS. The process starts at block 76 after the program has been loaded from disk into the memory region 50, after which the program will determine the type of display (Block 78) that is mounted on the terminal device 20 (Fig. 1). The program then determines if an optional parameter n, which lists the number of unused 16K pages of memory existing between addresses A000 and B800 (Fig. 4) and which is stored in the program is defined by the user (Block 80). If the parameter n is not defined, the program will set a default value based on the display found in Block 78 for the value of n.

The program then obtains the "n" number of 16K pages of memory (Figs. 4 and 5) from the LIM driver stored in the memory region 51 (Figs. 2 and 3). In response to receiving these 16K pages of memory, the program will map the pages starting at address A000 (Block 86)(Figs. 4 and 5). During this mapping operation, the program, using the PSP pointers stored in the memory region 72 (Fig. 6) of each of the memory control blocks 62, will locate the last memory control block (MCB) in the conventional or low memory 55 (Figs. 2 and 3) whose associated memory region has been mapped by the program (Block 88). The program will adjust the data in the size field 68 (Fig. 7) of this last MCB 62 so as to reflect the presence of the additional "n" pages mapped in the high memory beyond the 640K byte boundary (Block 90).

The program will then determine if a parameter "m", stored in the program, is equal to zero (Block 92) where the parameter "m" will be zero if the operator display unit 32 (Fig. 1) is present and between the numerical values 1-8 if the CRT display unit 24 is being used. The numerical values also represent the number of 16K pages of unused memory existing between addresses C000 and E000 comprising memory region 59 (Fig. 4) in which TSR programs will be stored. If the value of "m" is zero, the program will proceed over path A (Block 94) to be terminated (Block 106). Otherwise the program will request "m" number of 16K pages from the LIM drivers (Block 96) and start mapping (Block 98) these pages starting at physical address C000 (Fig. 4). Having mapped these pages, the program will copy the first 5 bytes located in fields 64-68 inclusive (Fig. 7) of the MCB (Block 100) associated with the memory region 59 to location D000 (Fig. 4) representing the new location of the memory region 59 (Fig. 4) in which are stored the TSR programs 69 (Fig. 11) and which DOS believes is the only free memory space available. The program will then adjust the size field 68 (Fig. 7) in the MCB to represent the end of the new TSR region 59 (Fig. 4) (Block 102) and will then issue a special LIM driver interface call (Block 104) which removes the "m" and "n" pages from being accessed to insure that these newly mapped pages are never switched out by any other program. DOS will then load the program LOADLO 71 (Fig. 11) which terminates the operation (Block 106) in a manner that will now be described.

Referring now to Fig. 9, there is disclosed a schematic flow diagram of the program LOADLO which disables (Block 106)(Fig. 8) the operation of the LOADHI program of Fig. 8 so that subsequent DOS program loads take place in the low memory space 55 (Figs. 2 and 3) which is below the 640K byte boundary (Figs. 2 and 3). The program starts (Block 110) by examining the MCB saved at location D000 (Fig. 4) for the CRT display based terminal and reconstructs the original MCB of the LOADHI program (Block 112) to update the size field 68 (Fig. 7) in the MCB to reflect the size of the expanded contiguous memory enabling DOS to access such memory. The program will then set the process ID bytes in the field 66 in the MCB (Block 114) identifying the LOADHI program instructing DOS that the program resides in the reconstructed MCB and should be wiped out. The LOADLO program then terminates itself terminating the operation (Block 116). Subsequent programs will now be able to be loaded in the DOS conventional or low memory space 55.

## Claims

1. A method of operating a terminal device (20) operatively connectable to either a first (24) or a second (32) display means having different memory requirements, the device (20) having processor means including first (53) and second (55) memory spaces, said second memory space serving to store application programs, and said first memory space (53) comprising a plurality of memory regions (38-46,56,60), characterized by providing each of said memory regions (38-46,56,60) with a memory control block, identifying the memory requirement of the display means (24,32) connected to the terminal device (20), identifying pages of unmapped memory regions in said first memory space (53), mapping said identified pages so as to map the unmapped memory regions, and storing data representing said mapped identified pages in the memory control block of the last memory region thereby mapped so as to indicate the presence of said mapped identified pages in said first memory space (53), whereby said mapped identified pages may be associated with said second (55) memory space to expand the size of said second (55) memory space.

2. A method according to claim 1, characterized in that each of said memory control blocks (62) is provided with a pointer (72) for identifying the start and end of the available memory in the associated memory region (36-52) and in that storing said data comprises adjusting the pointer (72) in the memory control block of said last memory region so that it points to the end of the memory in said second memory space (55), and notifying said processor (29) of the memory regions which have been mapped in said second memory space (55).

3. A method according to claim 2, characterized by selecting a predetermined first plurality of pages of unused memory regions in said first memory space (53), and storing said first plurality of pages in a memory region in said second memory space (55) for access by said processor (29) to map the unused memory regions.

4. A method according to claim 3, characterized by locating the memory control block (62) of said first plurality of pages of unused memory regions and storing data in said located memory control block indicating the location of said first number of pages of unused memory regions mapped by said processor (29).

5. A method according to claim 3 or 4, characterized by selecting a second plurality of unused pages of unmapped memory regions in said first memory space (53), mapping said second plurality of unused pages in said first memory space (53), adjusting the pointer in the memory control block (62) of said mapped second plurality of pages so that it points to the end of said mapped second plurality of pages, and by notifying said processor (29) of said second mapped plurality of pages so as to enable said processor (29) to store programs affecting its operation in said second plurality of unused pages.

6. A method according to claim 1, characterized by storing programs concerning the operation of said first display means (24) in a first memory region in said first memory space (53), obtaining a first numerical value representing the connection of said terminal device to said first display means (24) and also the number of pages of unused memory of a second memory region in said first memory space (53) located adjacent said first memory region, storing said represented pages of unused memory in a third memory region, located in said second memory space (55), for access by the processor, and mapping said unused memory of said second memory region.

7. A method according to claim 6, characterized by locating the memory control block (62) associated with said second memory region and storing data in the located memory control block (62) indicating the location of said pages of unused memory in said second memory region and mapped by said processor (29).

8. A method according to claim 7, characterized by adjusting the data in said located memory control block (62) to represent the pages of unused memory regions mapped by said processor (29) and which are contiguous with said memory space (55) region.

# FIG. 1

## FIG. 2

1 MB

36    34

| | |
|---|---|
| ROM BIOS | |
| BIOS EXTENSION | F000 — 38 |
| LIM PAGE FRAME | E000 — 40 |
| UNUSED (64K) | D000 — 42 |
| DISPLAY MEMORY | C000 — 44 |
| UNUSED (96K) | B800 — 46 |
| FREE DOS MEMORY | A000 — 48 |
| TSR's | — 50 |
| LIM DRIVERS | — 51 |
| DOS | — 52 |
| | 0000 |

53

640K

55

## FIG. 3

54

1MB

| | |
|---|---|
| 36 — ROM BIOS | |
| 38 — BIOS EXTENSION | F000 |
| 40 — LIM PAGE FRAME | E000 |
| 56 — UNUSED (192K) | D000 |
| 640 K | A000 |
| 48 — FREE DOS MEMORY | |
| 50 — TSR's | |
| 51 — LIM DRIVERS | |
| 52 — DOS | 0000 |

53

55

7

**FIG. 4**

```
              ┌─────34
  1 MB   ┌──────────────────┐  FFFF
         │  ROM BIOS AND    │
    36   │   EXTENSION      │
       ──┼──────────────────┤  E000  ⎫
         │                  │        ⎪
         │                  │  D000  ⎬  m = ≤ 8 x 16K
    59 ──┤      TSR         │        ⎪
       ──┼──────────────────┤  C000  ⎭
    44 ──┤   CRT DISPLAY    │
 736 K ──┼──────────────────┤  B800  ⎫
         │                  │        ⎬  n = ≤ 6 x 16K
 640K  ──┼──────────────────┤  A000  ⎭
         │                  │
         │                  │
         │                  │
         │                  │
         ├──────────────────┤
         │       DOS        │
         └──────────────────┘  0000
```

**FIG. 5**

```
              ┌─────54
  1 MB   ┌──────────────────┐  FFFF
         │  ROM BIOS AND    │
 896 K   │   EXTENSION      │
       ──┼──────────────────┤  E000  ⎫
         │                  │        ⎪
         │                  │        ⎬  n = ≤ 16 x 16K
         │                  │        ⎪
 640K  ──┼──────────────────┤  A000  ⎭
         │                  │
         │                  │
         │                  │
         ├──────────────────┤
         │       DOS        │
         └──────────────────┘  0000
```

# FIG. 6

MEMORY REGION B — 60

MCB FOR REGION B — 62

PSP FOR REGION B — 72

MEMORY REGION A — 60

MCB FOR REGION A — 62

PSP FOR REGION A — 72

34

# FIG. 7

| 0 | 1 | 2 | 3 | 4 | 5 | — | 15 |
|---|---|---|---|---|---|---|---|
| SIGNA-TURE | PROCESS ID | | SIZE | | UNUSED | | |

64  66  68  70  62

# FIG. 8

76 START

78 DETERMINE DISPLAY TYPE (CRT OR 2x20)

80 PARAMETER 'N' DEFINED — Y

N

82 SET N=DEFAULT VALUE BASED ON DISPLAY TYPE

84 OBTAIN 'N' NUMBER OF 16K PAGES

86 MAP THEM STARTING AT A000 ADDRESS

88 LOCATE THE LAST MCB

90 ADJUST SIZE FIELD OF MCB TO REFLECT ADDITIONAL PAGES MAPPED BEYOND 640K

92 PARAMETER M=0 — Y — 94 A

N

96 REQUEST 'M' NUMBER OF 16K PAGES

98 MAP THEM STARTING AT ADDRESS C000

100 COPY FIRST 5 BYTES OF MCB TO LOCATION D000

102 ADJUST MCB TO END OF TSR LOAD HIGH AREA

104 ISSUE SPECIAL LIM DRIVER CALL

94 A

106 TERMINATE

10

# FIG. 9

START ⌐110

EXAMINE MCB
SAVED AT D000
AND RECONSTRUCT
THE ORIGINAL MCB
OF LOADHI ⌐112

SET THE PROCESS
ID OF LOADHI ⌐114

TERMINATE ⌐116

# FIG. 11

TABLE

65

| |
|---|
| LOADHI ⌐67 |
| TSR A ⌐69 |
| TSR B |
| TSR C |
| TSR ETC. |
| LOADLO ⌐71 |

# FIG. 10

20

KEYBOARD ⌐22

PRINTER ⌐28

CPU

RAM ⌐31

ROM ⌐33

29

DISPLAY ⌐24